# EUROPÄISCHE PATENTSCHRIFT

(11) **EP 2 583 072 B1**
(45) Veröffentlichungstag und Bekanntmachung des Hinweises auf die Patenterteilung: **06.05.2015**
(21) Anmeldenummer: 11721004.7
(22) Anmeldetag: 20.05.2011
(51) Int. Cl.: G01L 5/28, B60T 17/22, F16H 25/22

(54) **BREMSENPRÜFSTAND MIT ELEKTRISCHEM BREMSAKTUATOR**
BRAKE TEST BENCH HAVING AN ELECTRICAL BRAKE ACTUATOR
BANC D'ESSAI DE FREINAGE DOTÉ D'UN ACTIONNEUR DE FREIN ÉLECTRIQUE

(30) Priorität: 18.06.2010 DE 102010024336
(43) Veröffentlichungstag der Anmeldung: 24.04.2013
(73) Patentinhaber: HORIBA Europe GmbH, 64293 Darmstadt (DE)
(72) Erfinder: GERMANN, Stefan, 64653 Lorsch (DE)
(74) Vertreter: Hoffmann, Jörg Peter
(86) Internationale Anmeldenummer: PCT/EP2011/002535
(87) Internationale Veröffentlichungsnummer: WO 2011/157343

(56) Entgegenhaltungen:
- EP-A2- 0 689 042
- DE-A1- 19 747 074
- DE-C1- 10 123 828
- DE-T2- 69 807 187
- US-A- 3 974 688
- US-A- 6 098 479

## Beschreibung

Die Erfindung betrifft einen Bremsenprüfstand gemäß dem Oberbegriff von Anspruch 1.

Bremsenprüfstände dienen zum Prüfen von insbesondere Fahrzeugbremsen, zum Beispiel hinsichtlich Verschleiß, Reibwert, Geräuschentwicklung, Dauerhaltbarkeit, Leistung etc. Zu diesem Zweck wird die zu prüfende Bremse an den Prüfstand angeschlossen. Dabei ist es möglich, einerseits die Bremse als eigenständiges Bauteil in den Prüfstand einzubauen und dort mit den Prüfstandskomponenten zu verbinden. Ebenso ist es möglich, ein vollständiges Fahrzeug oder auch Teile des Fahrzeugs (Achskomponenten etc.) im Prüfstand zu installieren und dann die zu prüfende Bremse an den Prüfstand anzuschließen. Die Bremse ihrerseits wird durch einen prüfstandsseitigen Dynamometer in bekannter Weise angetrieben bzw. belastet.

In all diesen Fällen ist es vorgesehen, dass der zum Betätigen der Bremse erforderliche Bremsdruck von dem Prüfstand erzeugt und bereitgestellt wird. Lediglich die eigentliche Bremse, die z.B. im Wesentlichen aus einer Bremsscheibe und einem die Bremsbeläge und Bremskolben tragenden Sattel besteht, bildet den Prüfling. Die Erzeugung des Bremsdrucks bzw. die Bereitstellung von Bremsfluid mit entsprechendem Bremsdruck erfolgt durch den Prüfstand.

Im Prüfstand ist dementsprechend eine Druckerzeugungseinrichtung vorgesehen, die einen Hauptbremszylinder aufweist. Der Hauptbremszylinder ist in gleicher Weise zu betätigen wie der Hauptbremszylinder in einem Fahrzeug. Dementsprechend ist es für ein möglichst realitätsnahes Prüfen der Bremse erforderlich, den Hauptbremszylinder des Prüfstands in gleicher Weise zu betätigen wie den Hauptbremszylinder in einem Fahrzeug. Daher muss der Bremsfuß eines Autofahrers auf dem Prüfstand simuliert werden, um eine hydraulisch betätigte Fahrzeugbremse testen zu können.

Zur Druckerzeugung, z. B. Simulation des Bremsfußes und damit Betätigen der Bremsanlage ist es bekannt, einen Aktuator vorzusehen.

Die Bremsen von Pkws und Kleinlastern sind in der Regel hydraulisch betätigt. Um diese Bremsanlagen in Prüfständen über einen Aktuator betreiben zu können, müssen sowohl der erreichbare (Maximal-)Druck als auch die Druckgradienten (Geschwindigkeit zum Aufbau des Drucks) wenigstens so gut erreicht werden wie in einem realen Fahrzeug. Das bedeutet, dass der Aktuator einen Bremsdruck von wenigstens 250 bar mit einem Druckgradienten von mindestens 200 bar pro Sekunde aufbauen muss. Dementsprechend werden an den Aktuator erhebliche Leistungsanforderungen gestellt.

In der Vergangenheit wurden auf Prüfständen zur Simulation des Fahrerfußes und damit zur Aufbringung der Pedalkraft bei der Bremsbetätigung für den Aktuator verschiedene Systeme eingesetzt. So sind z. B. aus der EP 0 689 042 A2 sogenannte pneumatisch/hydraulische Umsetzer bekannt, bei denen der Bremsaktuator zum Erzeugen der Pedalkraft und damit zum Betätigen des Hauptbremszylinders pneumatisch betrieben wird (pneumatischer Primärkreis), während der eigentliche Bremskreislauf (Sekundärkreis) hydraulisch gestaltet ist (hydraulische Bremsanlage). Ebenso sind hydraulisch/hydraulische Systeme bekannt, bei denen auch der Aktuator im Primärkreis hydraulisch angetrieben wird. Dabei wird über eine Hydraulikpumpe ein Druck im Primärkreis erzeugt und der Druck über ein Ventil und einen hydraulischen Geberzylinder über eine Betätigungsstange auf den Sekundärkreis (Fahrzeugbremsanlage) mit der Bremsflüssigkeit übertragen.

Bei diesen Systemen ist ein erheblicher konstruktiver Aufwand (besondere Ventile, reibungsreduzierte und zwangsgeschmierte Zylinder) erforderlich, um insbesondere die oben angegebene Dynamik (hoher Druckgradient) zu erreichen.

Aus der DE 101 23 828 C1 ist ein 2-Stationen-Schwungmassenbremsenprüfstand bekannt, bei dem der Fahrerfuß durch einen Aktuator simuliert wird. Dabei wird die komplette Bremsanlage eines Fahrzeugs, einschließlich des Hauptbremszylinders des Fahrzeugs, geprüft. Als Aktuator kann ein steuerbarer Elektroantrieb mit Spindelantrieb genutzt werden.

Darüber hinaus sind sogenannte Bremsassistenten bekannt, die über einen elektrisch angetriebenen Hilfsaktuator zusätzlich den Druckaufbau im Bremssystem unterstützen. Bei einem Not-Bremsvorgang kann somit die vom Fahrer über das Bremspedal aufgebrachte Bremskraft durch den Hilfsaktuator unterstützt werden. Die EP 2 100 784 A1 zeigt ein entsprechendes Beispiel.

Aus der DE 698 07 187 T2 ist eine Scheibenbremsen-Test- bzw. -Prüfvorrichtung bekannt, die eine Hochdruckfluid-Versorgung und eine Niedrigdruckfluid-Versorgung aufweist. Die Fluidversorgungen können wechselweise betrieben werden. Der eigentliche Bremsvorgang ist nur unter Nutzung der Hochdruckfluid-Versorgung durchführbar, während die Niedruckfluid-Versorgung dazu dient, mit niedrigem Druck die Bremsklötze an die Bremsscheibe anzulegen, sodass sich eine intermittierende Berührung der Bremsklötze mit der Bremsscheibe während jeder Umdrehung der Scheibe ergibt.

In der US 3,974,688 A wird ein Bremsenprüfbestand beschrieben, mit dem ein vollständiges Fahrzeugbremssystem geprüft werden kann. Das Bremspedal des Fahrzeugbremssystems wird durch einen hydraulischen Aktuator beaufschlagt.

Aus der US 6,098,479 A und der DE 197 47 074 A1 sind Fahrzeugbremsen mit Planetenrollengewindetrieb-Einrichtungen bekannt. Dabei werden die üblicherweise eingesetzten Hydrauliksysteme zum Bewegen der Bremsklötze vollständig durch elektromechanische Systeme ersetzt, die jeweils einen Elektromotor und einen von dem Elektromotor angetriebenen Planetenrollengewindetrieb aufweisen. Mit Hilfe der Planetenrollengewindetriebe werden die Bremsklötze an die Bremsscheiben angedrückt.

Der Erfindung liegt die Aufgabe zugrunde, einen Bremsenprüfstand anzugeben, bei dem der Fuß eines Autofahrers durch einen Bremsakutator mit ausreichender Bremskraft und genügender Geschwindigkeit des Druckaufbaus simuliert werden kann. Dabei soll nicht das Bremssystem in dem die Bremse aufweisenden Fahrzeug verändert werden, sondern vielmehr die üblicherweise vorhandene Bremshydraulik beibehalten werden.

Die Erfindung wird durch einen Prüfstand mit den Merkmalen von Anspruch 1 gelöst. Vorteilhafte Ausgestaltungen der Erfindung sind in den abhängigen Ansprüchen angegeben. Zudem wird ein Verfahren zur Verbesserung der Wiederholgenauigkeit der simulierten Bremsvorgänge in einem nebengeordneten Anspruch angegeben.

Ein erfindungsgemäßer Prüfstand für eine Bremse weist eine mechanisch betätigbare Druckerzeugungseinrichtung zum Bereitstellen eines Bremsfluids mit einem erhöhten Hydraulikdruck auf, wobei das Bremsfluid der Bremse zuführbar ist, um die Bremse zu betätigen. Weiterhin ist ein elektromechanischer Bremsaktuator zum mechanischen Betätigen der Druckerzeugungseinrichtung vorgesehen. Der Prüfstand ist dadurch gekennzeichnet, dass der Bremsaktuator einen durch eine Prüfstandssteuerung ansteuerbaren Elektromotor und einen von dem Elektromotor angetriebenen Planetenrollengewindetrieb aufweist, wobei der Planetenrollengewindetrieb mit der Druckerzeugungseinrichtung mechanisch gekoppelt ist, um die Druckerzeugungseinrichtung mechanisch zu betätigen.

Die Bremse selbst ist dabei nicht Bestandteil des Prüfstands sondern bildet den Prüfling.

Somit weist der Bremsaktuator den Elektromotor und den von dem Elektromotor angetriebenen Planetenrollengewindetrieb auf. Ein derartiger Planetenrollengewindetrieb ist zum Beispiel aus der EP 1 655 513 A1 bekannt. Bei einem Planetenrollengewindetrieb wird durch den Elektromotor ein Planetensatz drehend angetrieben, der in einem Innengewinde abrollt und dadurch axial seine Position verändert. Mit Hilfe eines derart ausgestalteten Bremsaktuators ist es möglich, innerhalb kürzester Zeit hohe Kräfte zu bewirken, die dann entsprechend über die Bremsdruckerzeugungseinrichtung hohe Bremsdrücke für die zu prüfende Bremse erzeugen können. Durch diese Anordnung lässt sich der Bremsfuß eines Autofahrers hervorragend simulieren, ohne dass dabei Abstriche in Kauf genommen werden müssten.

Vielmehr kann der Elektromotor durch eine entsprechende Steuerung mit hoher Präzision angesteuert werden, um das typische Bremsverhalten eines Autofahrers möglichst realitätsgetreu nachbilden zu können.

Ein Beispiel für einen Planetenrollengewindetrieb ist in der EP 1 655 513 A1 ausführlich beschrieben, sodass sich an dieser Stelle eine eingehende Beschreibung erübrigt. Im Prinzip weist der Planetenrollengewindetrieb eine Gehäusehülse mit einem Innengewinde, eine von dem Elektromotor antreibbare Antriebswelle, einen von der Antriebswelle drehend antreibbaren Rollenkäfig und mehrere von dem Rollenkäfig getragene Achsen auf, die sich parallel zu der Antriebswelle erstrecken und jeweils wenigstens eine Planetenrolle drehbar tragen. Dabei weisen die Planetenrollen an ihrem Außenumfang ein Gewindeprofil auf, das dem Gewindeprofil des Innengewindes der Gehäusehülse entspricht. Die Planetenrollen können bei einer Drehung der Antriebswelle und des Rollenkäfigs in dem Innengewinde umlaufen und dadurch eine axiale Relativbewegung zwischen den Planetenrollen und der Gehäusehülse bewirken.

Die axiale Relativbewegung ist entsprechend am Prüfstand abzustützen, sodass sie genutzt werden kann, um die Druckerzeugungseinrichtung des Prüfstands mechanisch zu betätigen.

So kann zum Beispiel der Planetenrollengewindetrieb einen Stößel aufweisen oder mit einem Stößel gekoppelt sein, sodass die genannte axiale Relativbewegung eine axiale Hin- und Herbewegung des Stößels bewirken kann. Der Stößel entspricht dann einer Betätigungsstange, die auf die Druckerzeugungseinrichtung (zum Beispiel einen Hauptbremszylinder) einwirkt, ähnlich einem Bremspedal bei einem Fahrzeug.

Die Erfindung betrifft somit nicht den Einsatz von elektrischen Bremssystemen in einem Pkw, bei dem in der Regel die Bremshydraulik komplett durch einen elektrischen Bremsaktuator ersetzt wird. Vielmehr bleibt bei dem erfindungsgemäßen Prüfstand das hydraulische Bremsprinzip nach wie vor in vollem Umfang erhalten. Lediglich der Bremsaktuator - im Fahrzeug der Bremsfuß des Fahrers, in bisherigen Prüfständen der pneumatische oder hydraulische Geber - wird erfindungsgemäß durch einen Elektromotor mit Servoumrichter und Planetenrollengetriebe gebildet.

Der Bremsaktuator kann eine Positionserfassungseinrichtung aufweisen, zum Erfassen der aktuellen Position des Stößels. Darunter ist auch zu verstehen, dass zum Beispiel die Drehungen des Läufers in dem Elektromotor erfasst werden. Aufgrund der Ausgestaltung des Planetenrollengewindetriebs ist ein fester - weil formschlüssiger - Zusammenhang zwischen den Läuferumdrehungen des Motors und der jeweiligen axialen Relativbewegung und damit der Position des Stößels definiert. Bei einer vorgegebenen Anzahl von Läuferumdrehungen wird stets die gleiche Stößelposition erreicht.

Dementsprechend kann die Positionserfassungseinrichtung einen Drehgeber, einen Hall-Sensor, einen induktiven Näherungssensor oder einen kapazitiven Näherungssensor aufweisen. Die Geber bzw. Sensoren können z.B. im oder am Elektromotor, im oder an dem Planetenrollengewindetrieb sowie in der Umgebung des Stößels angeordnet sein, um die axiale Bewegung des Stößels zu erfassen. Wenn der Motor als Stellmotor, z.B. mit einer PWM-Steuerung ausgebildet ist, kann die Motordrehzahl und -umdrehungsanzahl mit hoher Präzision durch die Steuerung vorgegeben werden.

Die Prüfstandssteuerung kann mit einer Motorsteuerung für den Elektromotor verbunden sein, wobei die Motorsteuerung zum Beispiel einen Umrichter und einen Servoregler aufweist. Damit ist es möglich, dass die Prüfstandssteuerung, die im Einzelnen die Prüfvorgänge für die Bremse steuert und überwacht, jeweils den Bremsaktuator und damit insbesondere den Elektromotor ansteuert, um die gewünschte Betätigung der Bremse zu erreichen.

Die Druckerzeugungseinrichtung kann einen Hauptbremszylinder, einen in dem Hauptbremszylinder durch die Wirkung des Bremsaktuators axial bewegbaren Druckkolben und einen mit dem Hauptbremszylinder über eine Versorgungsleitung verbundenen Vorratsbehälter für das Bremsfluid aufweisen. Insoweit bildet die Druckerzeugungseinrichtung einen an sich bekannten Teil einer klassischen hydraulischen Bremsanlage. Der Bremsaktuator wirkt dann zum Beispiel über den genannten Stößel auf den Hauptbremszylinder, so wie dies in einem Fahrzeug über das Bremspedal möglich ist.

Es kann eine Bremsleitung zum Verbinden des Hauptbremszylinders mit der zu prüfenden Bremse vorgesehen sein. Wie oben bereits beschrieben, bildet die Bremse den eigentlichen, nicht zum Prüfstand gehörenden Prüfling, während der Hauptbremszylinder bzw. die Druckerzeugungseinrichtung Bestandteil des Prüfstands, nicht jedoch des Fahrzeugs sein sollten. Dementsprechend stellt die Bremsleitung die Verbindung zwischen der Prüfstandsseite (Hauptbremszylinder) und dem Prüfling (Bremse) dar. Die prüfstandsseitige Bremsleitung kann dann in üblicher Weise an der nicht zum Prüfstand gehörenden Bremse angeschlossen werden.

Bei einer Variante kann eine die Versorgungsleitung und die Bremsleitung verbindende Bypassleitung vorgesehen sein, wobei in der Bypassleitung ein ansteuerbares Bypassventil angeordnet ist, das derart ansteuerbar ist, dass das Bypassventil geöffnet ist, wenn durch die Prüfstandssteuerung kein Betätigen der Bremse verlangt wird, und dass das Bypassventil geschlossen ist, wenn durch die Prüfstandssteuerung ein Betätigen der Bremse verlangt wird. Die Prüfstandssteuerung schaltet dementsprechend das Bypassventil und öffnet und schließt die Bypassleitung. Nur dann, wenn ein Betätigen der Bremse verlangt wird und somit Bremsdruck aufgebaut werden soll, ist die Bypassleitung geschlossen. In den anderen Fällen kann die Bypassleitung geöffnet werden.

Diese Variante hat den Vorteil, dass es immer möglich ist, den Druck im Bremssystem vollständig abzubauen. Ein Vorteil einer klassischen hydraulischen Betätigung im Primärkreis (Bremsaktorseite) ist die einfache und sichere Behandlung von Störungen. Im Falle einer Störung sollte der Druck im Primärkreis stets vollständig abgebaut oder zumindest reduziert werden, um auch den Bremsdruck auf der Sekundärseite entsprechend vermindern zu können. Auf diese Weise soll gewährleistet sein, dass zum Beispiel in sehr kurzer Zeit die Last von einer sich überhitzenden Fahrzeugbremse genommen werden kann, um die Bremse zu schützen. Bei einem hydraulisch aufgebauten Primärkreis kann stets eine einfache und sofortige Reduktion des Drucks im Sekundärkreis des Bremssystems erreicht werden, wenn die im Primärkreis zum Erzeugen des Versorgungsdrucks vorgesehene Pumpe abgeschaltet werden kann. Wenn jedoch im Primärkreis - wie hier vorgeschlagen - ein elektrisch angetriebener Bremsaktuator vorgesehen ist, ist ein spontaner Druckabbau nicht möglich. Bedingt durch die Reibung In den mechanischen Komponenten (Elektromotor, Planetenrollengewindetrieb) lässt sich der Druck auf der Primärseite, das heißt der auf den Hauptbremszylinder wirkende Druck nicht in der gewünschten Geschwindigkeit abbauen. Auch bei einem Abschalten des Stroms für den Elektromotor verbleibt immer noch ein signifikanter Restdruck in der Anlage. Aus diesem Grund wird das oben beschriebene Bypassventil vorgeschlagen, das parallel zum Hauptbremszylinder angeordnet wird und durch die Prüfstandssteuerung geschaltet werden kann. So ist es möglich, im Falle eines Abschaltens des Bremsvorgangs spontan die Bremsanlage (Sekundärkreis) drucklos zu schalten, ohne dass der Geber (Bremsaktuator, Primärseite) am Hauptbremszylinder vollständig aus dem Zylinder ausgefahren sein muss und ein in dem Hauptbremszylinder vorhandenes Bodenventil öffnet.

Der Hauptbremszylinder kann das genannte Bodenventil aufweisen, über das ein in dem Hauptbremszylinder anstehender Hydraulikdruck vollständig abbaubar ist, wenn das Bodenventil geöffnet ist. Das Bodenventil lässt sich insbesondere in Abhängigkeit von einer Stellung des Druckkolbens im Hauptbremszylinder öffnen und schließen, wobei das Bodenventil geöffnet ist, wenn der Druckkolben in einer Ausgangsstellung steht. Dieser Aufbau eines Hauptbremszylinders ist an sich bekannt und bedarf daher keiner eingehenderen Beschreibung.

Bei einer Variante ist der Prüfstand derart ausgestaltet, dass bei einem Bremsvorgang nacheinander die folgenden Zustände erreicht werden können: Offenzustand: Druckkolben in geöffneter Stellung (erste Stellung), Bodenventil geöffnet, Bypassventil geöffnet;
Referenzzustand: Druckkolben axial verschoben in eine zweite Stellung, Bodenventil durch den Druckkolben geschlossen, Bypassventil geöffnet;
Bremszustand: Druckkolben axial verschoben in die zweite Stellung oder in eine weitere, von der ersten Stellung axial weiter als die zweite Stellung entfernte dritte Stellung; Bodenventil durch den Druckkolben geschlossen; Bypassventil durch die Prüfstandssteuerung geschlossen.

Diese Variante beruht auf folgender Überlegung: zum Erreichen von reproduzierbaren Prüfergebnissen ist es erforderlich, eine möglichst gute Wiederholgenauigkeit bei den einzelnen Bremsvorgängen zu erreichen. Dafür muss insbesondere der Druckaufbau bei den Bremsungen mit hoher Wiederholgenauigkeit möglich sein. Bedingt durch die physikalischen Eigenschaften von Dichtungen und Gummielementen in hydraulischen Anlagen (hier insbesondere im Hauptbremszylinder) ist deren Position bzw. Ausrichtung häufig nicht eineindeutig. Vielmehr sind hinsichtlich der elastischen Bauelemente verschiedene Stellungen möglich, die dazu führen, dass jeweils unterschiedliche Drücke aufgebaut werden.

Ein Druckaufbau erfolgt in der Regel dadurch, dass zunächst der Stößel bis zum Schließen des Bodenventils im Hauptbremszylinder betätigt wird. Anschließend erfolgt der Druckaufbau im Sekundärkreis und dabei ein Verformen der Gummielemente und Dichtungen im Hauptbremszylinder. Dieser Druckaufbau setzt sich fort bis zum Erreichen des gewünschten maximalen Bremsdrucks.

Da nun die Lage des Druckpunktes, also der Stellung des Druckkolbens, ab der ein Bremsdruck aufgebaut wird, relativ zur Stößelposition nicht exakt definiert ist, gab es in der Vergangenheit Überlegungen, das Bodenventil im Hauptbremszylinder zu entfernen und so einen geschlossenen Bremskreis zu erreichen. Dies hat jedoch den Nachteil, dass bei einer Erwärmung und damit verbundenen Ausdehnung der Bremsflüssigkeit auch beim vollständigen Zurückfahren des Gebers (Bremsaktuator) nicht mehr 0 bar erreicht werden. Hier verbleibt ein gewisser Mindestdruck in der Anlage, der ein vollständiges Abschalten der Bremse nicht gewährleistet. Ein vollständiger Druckabbau ist aufgrund des dann fehlenden Bodenventils nicht mehr möglich.

Mit Hilfe der jetzt beschriebenen Variante lässt sich dieser Nachteil jedoch vermeiden. Insbesondere bleibt dabei das Bodenventil im Hauptbremszylinder erhalten. Der Bremsaktuator fährt dann bei einer noch geöffneten Bypassleitung das Bodenventil durch Bewegen des Druckkolbens zu. Während dieses Schrittes ist der Bremskreis immer noch drucklos.

Durch das Zufahren des Bodenventils auf eine vordefinierte Referenzposition werden reproduzierbare Verhältnisse für die Gummilager und -dichtungen, insbesondere im Hauptbremszylinder, geschaffen. Die Gummilager und Dichtungen sind dann in eine Stellung bewegt bzw. umgeklappt, in der sie auch bei einer Erhöhung des Bremsdrucks verbleiben.

Erst dann wird - durch Befehl der Prüfstandssteuerung - das Bypassventil geschlossen, sodass der eigentliche Bremsvorgang beginnen kann.

Erwärmt sich dabei die Bremsflüssigkeit und dehnt sich dementsprechend aus, kann nach Beendigung des Bremsvorgangs der Druckkolben im Hauptbremszylinder wieder so weit zurückgefahren werden, dass das Bodenventil erneut geöffnet wird. Unter Druck stehendes Bremsfluid kann dann entweichen, um den Druck im Sekundärkreis vollständig abzubauen.

Auf diese Weise werden reproduzierbare Verhältnisse im Sekundärkreis (Bremskreis) erreicht. Mit diesem Verfahren ist es möglich, zuverlässig und sicher auch kleine Drücke bei thermisch anspruchsvollen Bremsungen (Ausdehnung des Mediums Bremsflüssigkeit durch Erwärmen der Bremse, zum Beispiel bei einem langen Bremsvorgang zur Simulation von Bergabfahrten) durch das Vorhandensein des Bodenventils zu nivellieren. Zudem sind reproduzierbare Testbremsungen durch eine definierte Position des Bodenventils möglich, ohne dass beim eigentlichen Druckaufbau (nach Schließen des Bodenventils) noch Dichtungen oder Gummielemente im Hauptbremszylinder verformt werden müssten, die den Druckaufbau behindern oder zumindest verändern würden.

Diese und weitere Vorteile und Merkmale werden nachfolgend anhand eines Beispiels unter Zuhilfenahme der begleitenden Figuren näher erläutert. Es zeigen:
- **Fig. 1**: eine schematische Gesamtansicht eines Bremsenprüfstands;
- **Fig. 2**: in schematischer Darstellung die Bremsanlage des Bremsenprüfstands mit Prüfling; und
- **Fig. 3**: eine Detailansicht eines Hauptbremszylinders mit parallel geschaltetem Bypassventil.

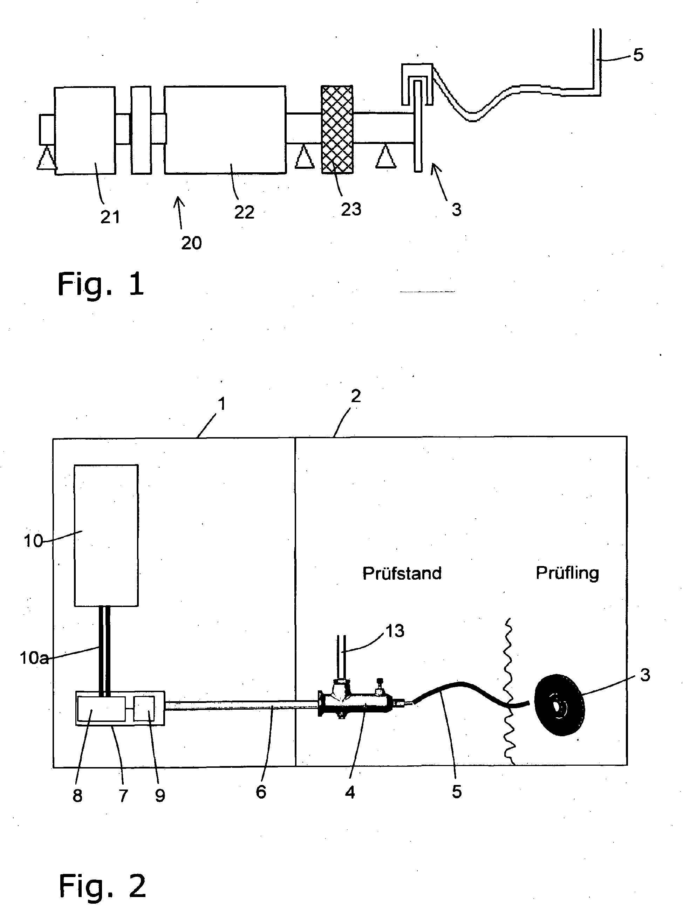

Fig. 1 zeigt den prinzipiellen Aufbau eines erfindungsgemäßen Prüfstands.

Der Prüfstand ist in an sich bekannter Weise aufgebaut und weist eine Hauptwelle 20 mit einem Schwungrad 21, einem Dynamometer 22 und einer Drehmomentmesseinrichtung 23 auf. Die Hauptwelle 20 kann selbstverständlich in verschiedene Teilabschnitte unterteilt sein, die z.B. durch Kardanwellen in bekannter Weise miteinander verbunden sind.

An einem Ende der Hauptwelle 20 ist eine Fahrzeugbremse 3 angebaut, die den eigentlichen Prüfling darstellt und nicht Bestandteil des Prüfstands ist. Der zum Betätigen der Fahrzeugbremse 3 erforderliche Hydraulik- bzw. Bremsdruck wird über eine Bremsleitung 5 bereitgestellt, die in Verbindung mit der gesamten Bremsanlage anhand von Fig. 2 erläutert wird.

Fig. 2 zeigt eine Teildarstellung mit den zum Betätigen der Bremse erforderlichen Komponenten der Bremsanlage.

In der schematischen Darstellung von Fig. 2 wird ein Primärkreis 1 von einem Sekundärkreis 2 unterschieden. Der Primärkreis 1 basiert auf einem elektrischen bzw. elektromechanischen Wirkprinzip und dient zum Simulieren des Bremsfußes eines Autofahrers. Die dabei erzeugte Kraft wirkt dann auf die eigentliche Bremsanlage, die im Sekundärkreis 2 abgebildet ist und auf einem hydraulischen Wirkprinzip basiert. Als Bestandteil des Sekundärkreises ist auch die als Prüfling dienende Fahrzeugbremse 3 dargestellt, die jedoch nicht Bestandteil des Prüfstands selbst ist.

An der Fahrzeugbremse 3 sind die üblichen Komponenten vorgesehen, zum Beispiel die in Fig. 1 und 2 gezeigte Bremsscheibe, aber auch die Bremsbeläge, Bremskolben, Bremssattel etc. Da die Bremskolben durch das von der Bremsanlage unter Druck bereitgestellte Bremsfluid bewegt werden, stellt somit auch die Fahrzeugbremse 3 einen Teil des Sekundärkreises 2 dar, obwohl sie nicht Bestandteil des Prüfstands ist.

Im Sekundärkreis 2 ist ein Hauptbremszylinder 4 vorgesehen, der in bekannter Weise mit Bremsflüssigkeit (Bremsfluid) von einem nicht dargestellten Vorratsbehälter gespeist wird. Der Hauptbremszylinder 4 dient dazu, einen Druck in der Bremsflüssigkeit aufzubauen, der über eine Bremsleitung 5 zu der Fahrzeugbremse 3 geführt wird. Die Fahrzeugbremse 3 kann somit beim Einbau des Prüflings in den Prüfstand an die Bremsleitung 5 angeschlossen werden.

In dem Hauptbremszylinder 4 ist ein nicht dargestellter Druckkolben und ein an sich bekanntes Bodenventil vorgesehen, über das ein in dem Hauptbremszylinder 4 anstehender Hydraulikdruck vollständig abbaubar ist, wenn das Bodenventil geöffnet ist. Durch eine axiale Verschiebung des Druckkolbens lässt sich das Bodenventil verschließen, wenn ein Bremsdruck aufgebaut werden soll.

Das Verschieben des Druckkolbens in dem Hauptbremszylinder 4 erfolgt mit Hilfe einer Betätigungsstange bzw. eines Stößels 6, der Teil eines Bremsaktuators 7 ist.

Der Bremsaktuator weist einen Elektromotor 8 und einen von dem Elektromotor 8 angetriebenen Planetenrollengewindetrieb 9 auf. Durch das drehende Antreiben des Planetenrollengewindetriebs 9 ändert sich die axiale Länge des Bremsaktuators 7, sodass der Stößel 6 verlagert wird und den Druckkolben im Hauptbremszylinder 4 axial verschiebt. Eine Erzeugung bzw. Erhöhung des Bremsdrucks ist die Folge.

Durch entsprechende Ansteuerung des Elektromotors 8 ist es somit möglich, den Bremsdruck an der Fahrzeugbremse 3 in nahezu beliebiger Stärke und mit nahezu beliebigem Geschwindigkeitsprofil (Druckgradient) aufzubauen bzw. zu ändern.

Zu diesem Zweck ist eine Motorsteuerung 10 vorgesehen, die ihrerseits Bestandteil der Prüfstandssteuerung sein kann oder durch die Prüfstandssteuerung angesteuert wird. Die Motorsteuerung 10 ist über Elektroleitungen 10a mit dem Elektromotor 8 verbunden und kann insbesondere einen Umrichter mit einem Servoregler aufweisen, um den Elektromotor 8 präzise ansteuern zu können.

Es kann von Vorteil sein, wenn die Zahl der Rotorumdrehungen in dem Elektromotor exakt vorbestimmt und durch die Motorsteuerung 10 bewirkt wird, weil aufgrund der formschlüssigen Wirkungen im Planetenrollengewindetrieb 9 die Rotordrehungen zwingend eine entsprechend axiale Verschiebung des Stößels 6 bewirken. Wenn somit der Elektromotor 8 mit großer Präzision angesteuert wird, lässt sich auch der Stößel 6 mit der entsprechenden Präzision bewegen.

Ebenso ist es möglich, die Position des Stößels 6 durch geeignete Geber oder Aufnehmer zu bestimmen und an die Prüfstandssteuerung rückzumelden.

Der Planetenrollengewindetrieb 9 ist an sich bekannt und zum Beispiel in der EP 1 655 513 A1 beschrieben. Dabei kann zum Beispiel ein hülsenartiges Gehäuse vorgesehen sein, sowie ein in dem Gehäuse angeordnetes Verstellbauteil, das mit seinem Endbereich aus einer stirnseitigen Öffnung des hülsenartigen Gehäuses herausgeführt ist. Durch einen Drehantrieb, zum Beispiel den Elektromotor 8, ist über das Planetenrollengetriebe 9 das Verstellbauteil axial zum hülsenartigen Gehäuse verstellbar. Das hülsenartige Gehäuse ist verdrehsicher angeordnet und an seiner zylindrischen Innenwand mit einem Gewinde versehen. An dem ebenfalls verdrehgesicherten Verstellbauteil ist der Elektromotor angeordnet, der eine zum hülsenartigen Gehäuse koaxiale Antriebswelle besitzt, von der ein Rollenkäfig um die Längsachse des hülsenartigen Gehäuses drehbar antreibbar ist. Der Rollenkäfig weist mehrere zur Längsachse des hülsenartigen Gehäuses parallele Achsen auf, auf denen jeweils Planetenrollen mit dem Profil des Gewindes entsprechenden Rillen frei drehbar gelagert sind. Die Planetenrollen greifen mit ihren dem Profil des Gewindes entsprechenden Rillen in das Gewinde des hülsenartigen Gehäuses ein.

Bei einem Betätigen des Elektromotors und damit Drehen von seiner Antriebswelle wird auch der Rollenkäfig gedreht, sodass die Planetenrollen auf der Innenseite des Gehäuses, das heißt in dem dortigen Innengewinde abrollen. Durch Abrollen der Planetenrollen wird eine Axialbewegung erzeugt, die eine Relativbewegung zwischen dem hülsenartigen Gehäuse und dem Verstellbauteil bewirkt. Dementsprechend schiebt sich das Verstellbauteil aus dem Gehäuse heraus bzw. in das Gehäuse hinein. Diese axiale Linearbewegung kann über den Stößel 6 entweder direkt oder über eine geeignete Hebelanordnung auf den Hauptbremszylinder 4 und dort insbesondere auf den verschiebbaren Druckkolben übertragen werden.

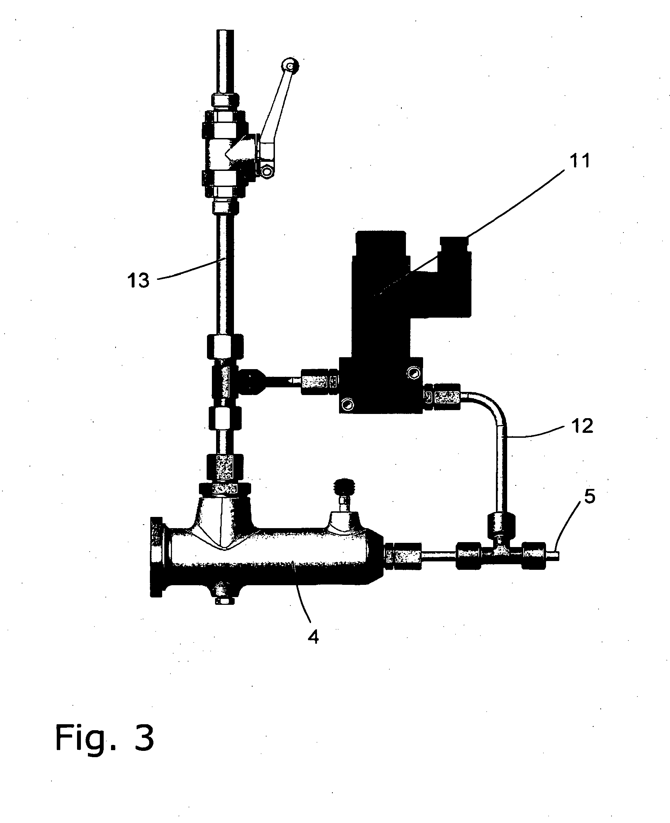

Fig. 3 zeigt eine Weiterentwicklung, die insbesondere die Möglichkeit eröffnet, den Sekundärkreis druckfrei zu schalten.

Zu diesem Zweck ist ein Bypassventil 11 vorgesehen, das in einer Bypassleitung 12 angeordnet ist, welche die Bremsleitung 5 mit einer zu dem nicht dargestellten Vorratsbehälter für das Bremsfluid führenden Versorgungsleitung 13 verbindet. Das Bypassventil 11 ist - wie in Fig. 3 gezeigt - somit zu dem Hauptbremszylinder 4 parallel geschaltet.

Das Bypassventil 11 kann zum Beispiel durch die Prüfstandssteuerung geöffnet oder geschlossen werden. Dementsprechend ist das Bypassventil 11 elektrisch, hydraulisch oder pneumatisch ansteuerbar. Zum Beispiel kann das Bypassventil 11 als Magnetventil ausgebildet sein, wobei es geschlossen ist, wenn ein Strom anliegt, während es geöffnet ist, wenn der Spannungseingang stromlos ist.

Der Hintergrund für das Vorsehen des Bypassventils 11 ist folgender: bei einer klassischen hydraulischen Betätigung im Primärkreis 1 (Seite des Bremsaktuators) lassen sich Störungen einfach behandeln. Wenn auf der Primärseite die Pumpe für den Versorgungsdruck des Bremsaktuators (als Ersatz für den Bremsfuß des Autofahrers) abgeschaltet wird, baut sich der Druck sofort ab, sodass keine Kraft mehr auf den Hauptbremszylinder 4 bzw. den dort vorgesehenen Druckkolben wirkt. Dies hat auch eine einfache und sofortige Reduktion des Druckes im Sekundärkreis des Bremssystems zur Folge. Wenn jedoch der Primärkreis - wie hier vorgeschlagen - einen elektrisch angetriebenen Bremsaktuator 7 aufweist, ist ein spontaner Druckabbau nicht mehr möglich. Bedingt durch die hohe Reibung, zum Beispiel im Planetenrollengewindetrieb 9, aber auch im Elektromotor 8, lässt sich ein schneller und sicherer Druckabbau nicht erreichen. Dementsprechend kann der Stößel 6 ohne aktives Mitwirken durch den elektromechanischen Bremsaktuator 7 sich nicht schnell zurück in eine Nullstellung bewegen. Dementsprechend bleibt auch der Druck im Sekundärkreis (Bremskreis) hoch. Bei einem Abschalten des elektrischen Stromes verbleibt demnach immer noch ein signifikanter Restdruck in der Bremsanlage. Für eine Notabschaltung des Systems, zum Beispiel bei einer Überhitzung des Prüflings, kann dies nachteilig sein.

Um das Problem zu lösen, wird der in Fig. 3 gezeigte Aufbau vorgeschlagen, bei dem das Bypassventil 11 parallel zu dem Hauptbremszylinder 4 angeordnet ist. Durch den Einsatz des Bypassventils 11 bzw. der Bypassleitung 12 ist es möglich, jederzeit die Bremsanlage spontan drucklos zu schalten, ohne dass der Geber (Stößel 6) am Hauptbremszylinder 4 vollständig aus dem Hauptbremszylinder 4 gezogen sein muss. Nur dann wäre es nämlich möglich, den Druck über den Hauptbremszylinder 4 und ein dort vorgesehenes Bodenventil abzubauen.

Bei der in Fig. 3 gezeigten Ausführungsform kann jedoch die Bypassleitung 12 mit Hilfe des Bypassventils 11 geöffnet werden, sodass spontan der Druck in der Bremsleitung 5 über die Versorgungsleitung 13 abgebaut werden kann. Dadurch lässt sich der Sekundärkreis 2 in einen sicheren Zustand bringen, auch dann, wenn der Primärkreis 1 noch voll aktiviert ist, das heißt, der Bremsaktuator 7 in ausgefahrener Stellung, um einen maximalen Bremsdruck zu erreichen.

Mit Hilfe des Bypassventils 11 ist es auch möglich, die Wiederholgenauigkeit im Druckaufbau bei Bremsungen zu verbessern. Bedingt durch die physikalischen Eigenschaften von Dichtungen und Gummielementen im Hauptbremszylinder 4 ist deren Position nicht immer eindeutig, sodass - je nach Stellung der elastischen Bauelemente - bei gleichem Bewegungsweg des Bremsaktuators 7 bzw. des Stößels 6 unterschiedliche Druckwirkungen im Bremskreis erzeugt werden.

Mit Hilfe der Prüfstandssteuerung kann jedoch folgender Verfahrensablauf beim Erzeugen des Bremsdrucks erreicht werden:
In der Ausgangsstellung ist der Bremsaktuator 7 mit dem Stößel 6 voll eingefahren, sodass sich der Druckkolben im Hauptbremszylinder 4 in der geöffneten Stellung befindet. Dementsprechend ist das üblicherweise im Hauptbremszylinder 4 vorgesehene Bodenventil geöffnet. Durch Betätigen des Bremsaktuators 7 fährt der Druckkolben im Hauptbremszylinder 4 das Bodenventil zu, wobei die Bypassleitung 12 über das Bypassventil 11 geöffnet ist. Dementsprechend kann sich in dem Bremskreis noch kein Druck aufbauen.

Durch das Zufahren des Bodenventils ändern die Gummilager und -dichtungen ihren Zustand, das heißt sie verschieben sich und nehmen danach reproduzierbar stets die gleiche Stellung ein. Erst danach wird das Bypassventil 11 durch die Prüfstandssteuerung geschlossen, sodass nachfolgend der eigentliche Bremsvorgang beginnen kann und der Bremsdruck erhöht wird.

Wenn sich im Prüfbetrieb die Bremsflüssigkeit erwärmt und ausdehnt, kann mit Hilfe der Prüfstandssteuerung der Druckkolben in die Ausgangsstellung zurück und das Bodenventil geöffnet werden, um den Druck in der Bremsanlage vollständig abzubauen. Danach kann durch das Zufahren des Bodenventils wieder die vordefinierte Referenzposition erreicht werden, um reproduzierbare Verhältnisse für den nächsten Bremsvorgang zu erreichen.

## Patentansprüche

1. Prüfstand für eine Bremse (3), mit
- einer mechanisch betätigbaren Druckerzeugungseinrichtung (4) zum Bereitstellen eines Bremsfluids mit einem erhöhten Hydraulikdruck, wobei das Bremsfluid der Bremse (3) zuführbar ist, um die Bremse (3) zu betätigen; und mit
- einem elektromechanischen Bremsaktuator (7) zum mechanischen Betätigen der Druckerzeugungseinrichtung (4);
**dadurch gekennzeichnet, dass**
- der Bremsaktuator (7) einen durch eine Prüfstandssteuerung ansteuerbaren Elektromotor (8) und einen von dem Elektromotor (8) angetriebenen Planetenrollengewindetrieb (9) aufweist; und dass
- der Planetenrollengewindetrieb (9) mit der Druckerzeugungseinrichtung (4) mechanisch gekoppelt ist, um die Druckerzeugungseinrichtung (4) mechanisch zu betätigen.

2. Prüfstand nach Anspruch 1, **dadurch gekennzeichnet, dass** der Planetenrollengewindetrieb (9) aufweist
- eine Gehäusehülse mit einem Innengewinde;
- eine von dem Elektromotor (8) antreibbare Antriebswelle;
- einen von der Antriebswelle drehend antreibbaren Rollenkäfig: und
- mehrere von dem Rollenkäfig getragene Achsen, die sich parallel zu der Antriebswelle erstrecken und jeweils wenigstens eine Planetenrolle drehbar tragen: wobei
- die Planetenrollen an ihrem Außenumfang ein Gewindeprofil aufweisen, das dem Gewindeprofil des Innengewindes der Gehäusehülse entspricht; und wobei
- die Planetenrollen bei einer Drehung der Antriebswelle und des Rollenkäfigs in dem Innengewinde umlaufen und dadurch eine axiale Relativbewegung zwischen den Planetenrollen und der Gehäusehülse bewirken.

3. Prüfstand nach Anspruch 1 oder 2, **dadurch gekennzeichnet, dass**
- der Planetenrollengewindetrieb (9) einen Stößel (6) aufweist; und dass
- die axiale Relativbewegung eine axiale Hin- und Herbewegung des Stößels (6) bewirkt.

4. Prüfstand nach einem der vorangehenden Ansprüche, **dadurch gekennzeichnet, dass** der Bremsaktuator (7) eine Positionserfassungseinrichtung aufweist, zum Erfassen der aktuellen Position des Stößels (6).

5. Prüfstand nach Anspruch 4, **dadurch gekennzeichnet, dass** die Positionserfassungseinrichtung einen Drehgeber, einen Hall-sensor, einen induktiven Näherungssensor oder einen kapazitiven Näherungssensor aufweist.

6. Prüfstand nach einem der vorangehenden Ansprüche, **dadurch gekennzeichnet, dass**
- die Prüfstandssteuerung mit einer Motorsteuerung (10) für den Elektromotor (8) verbunden ist;
- die Motorsteuerung (10) einen Umrichter und einen Servoregler aufweist.

7. Prüfstand nach einem der vorangehenden Ansprüche, **dadurch gekennzeichnet, dass** die Druckerzeugungseinrichtung einen Hauptbremszylinder (4), einen in dem Hauptbremszylinder (4) durch die Wirkung des Bremsaktuators (7) axial bewegbaren Druckkolben und einen mit dem Hauptbremszylinder (4) über eine Versorgungsleitung (13) verbundenen Vorratsbehälter für das Bremsfluid aufweist.

8. Prüfstand nach Anspruch 7 **dadurch gekennzeichnet, dass** eine Bremsleitung (5) zum Verbinden des Hauptbremszylinders (4) mit der zu prüfenden Bremse (3) vorgesehen ist.

9. Prüfstand nach Anspruch 7 oder 8 **dadurch gekennzeichnet, dass**
- eine die Versorgungsleitung (13) und die Bremsleitung (5) verbindende Bypassleitung (12) vorgesehen ist;
- in der Bypassleitung (12) ein ansteuerbares Bypassventil (11) angeordnet ist: und dass
- das Bypassventil (11) derart ansteuerbar ist, dass das Bypassventil (11) geöffnet ist, wenn durch die Prüfstandssteuerung kein Betätigen der Bremse (3) verlangt wird, und dass das Bypassventil (11) geschlossen ist, wenn durch die Prüfstandssteuerung ein Betätigen der Bremse (3) verlangt wird.

10. Prüfstand nach Anspruch 7, 8 oder 9, **dadurch gekennzeichnet, dass**
- der Hauptbremszylinder (4) ein Bodenventil aufweist, über das ein in dem Hauptbremszylinder (4) anstehender Hydraulikdruck vollständig abbaubar ist, wenn das Bodenventil geöffnet ist:
- das Bodenventil in Abhängigkeit von einer Stellung des Druckkolbens öffen- und schließbar ist;
- das Bodenventil geöffnet ist, wenn der Druckkolben in einer Ausgangsstellung steht.

11. Prüfstand nach Anspruch 9, **dadurch gekennzeichnet, dass** bei einem Bremsvorgang nacheinander die folgenden Zustände erreichbar sind:
- Offfenzustand: Druckkolben in geöffneter Stellung (erste Stellung), Bodenventil geöffnet, Bypassventil (11) geöffnet;
- Referenzzustand: Druckkolben axial verschoben in eine zweite Stellung, Bodenventil durch den Druckkolben geschlossen, Bypassventil (11) geöffnet;
- Bremszustand: Druckkolben axial verschoben in die zweite Stellung oder in eine weitere, von der ersten Stellung axial weiter als die zweite Stellung entfernte dritte Stellung; Bodenventil durch den Druckkolben geschlossen; Bypassventil (11) durch die Prüfstandssteuerung geschlossen.

12. Verfahren zum Betätigen eines Prüfstands nach einem der Ansprüche 7 bis 11, mit den Schritten
- Ansteuern des Bremsaktuators (7) zum Bewegen des Druckkolbens in eine geöffnete Stellung, in der das Bodenventil des Hauptbremszylinders (4) geöffnet ist;
- Ansteuern des Bremsaktuators (7) zum Bewegen des Druckkolbens und dabei Schließen des Bodenventils bei geöffnetem Bypassventil (11);
- Schließen des Bypassventils (11);
- Ansteuern des Bremsaktuators (7) zum weiteren Bewegen des Druckkolbens und Aufbauen eines Bremsdrucks in dem Hauptbremszylinder (4) und damit Beginnen des Bremsvorgangs.

## Claims

1. A test bench for a brake (3) comprising
- a pressure generating assembly (4) for providing a brake fluid with an increased hydraulic pressure, wherein said pressure generating assembly (4) can be actuated mechanically and wherein the brake fluid can be supplied to the brake (3) in order to actuate the brake (3); and comprising:
- an electromechanical brake actuator (7) for mechanical actuation of the pressure generating assembly (4);
**characterized in that**
- the brake actuator (7) comprises an electric motor (8) that can be activated by a test bench control and a planetary roller screw drive (9) that is driven by the electric motor (8); and that
- the planetary roller screw drive (9) is mechanically coupled to the pressure generating assembly (4) in order to mechanically actuate the pressure generating assembly (4).

2. The test bench according to claim 1, **characterized in that** the planetary roller screw drive (9) comprises:
- a housing bushing with an internal thread;
- a drive shaft that can be driven by the electric motor (8);
- a roller cage that can be driven in a rotary movement by the drive shaft; and
- a plurality of axles carried by the roller cage, said axles extending in parallel to the drive shaft and each carrying at least one planetary roller in a rotating manner; wherein
- the planetary rollers comprise at their outer perimeter a thread profile which corresponds to the thread profile of the internal thread of the housing bushing; and wherein
- during a rotation of the drive shaft and the roller cage, the planetary rollers rotate in the internal thread and, therefore, produce an axial relative movement between the planetary rollers and the housing bushing.

3. The test bench according to claim 1 or 2, **characterized in that**
- the planetary roller screw drive (9) comprises a plunger (6); and that
- the axial relative movement produces an axial bidirectional movement of the plunger (6).

4. The test bench according to anyone of the preceding claims, **characterized in that** the brake actuator (7) comprises a position detecting assembly for detecting the current position of the plunger (6).

5. The test bench according to claim 4, **characterized in that** the position detecting assembly comprises a rotary encoder, a hall sensor, an inductive proximity sensor, or a capacitive proximity sensor.

6. The test bench according to anyone of the preceding claims, **characterized in that**
- the test bench control is connected to a motor control (10) for the electric motor (8);
- the motor control (10) comprises a converter and a servo regulator.

7. The test bench according to anyone of the preceding claims, **characterized in that** the pressure generating assembly comprises a brake master cylinder (4), a pressure piston that can be axially moved in the brake master cylinder (4) because of the effect of the brake actuator (7), and a storage tank for the brake fluid that is connected to the brake master cylinder (4) via a supply line (13).

8. The test bench according to claim 7, **characterized in that** a brake line (5) is provided for connecting the brake master cylinder (4) to the brake (3) to be tested.

9. The test bench according to claim 7 or 8, **characterized in that**
- a bypass line (12) connecting the supply line (13) and the brake line (5) is provided;
- a bypass valve (11) that can be activated is arranged in the bypass line (12); and that
- the bypass valve (11) can be activated such that the bypass valve (11) is open when the test bench control does not request an actuation of the brake (3) and that the bypass valve (11) is closed, when the test bench control requests an actuation of the brake (3).

10. The test bench according to claim 7, 8 or 9, **characterized in that**
- the brake master cylinder (4) comprises a bottom check valve via which a hydraulic pressure present in the brake master cylinder (4) can be completely relieved when the bottom check valve is open;
- the bottom check valve can be opened and closed subject to a position of the pressure piston;
- the bottom check valve is open when the pressure piston is in an initial position.

11. The test bench according to claim 9, **characterized in that** the following states can be successively reached in case of a brake application:
- open state: pressure piston in open position (first position), bottom check valve open, bypass valve (11) open;
- reference state: pressure piston axially displaced to a second position, bottom check valve closed by the pressure piston, bypass valve (11) open;
- brake state: pressure piston axially displaced to the second position or to a further third position that is axially more remote from the first position than the second position, bottom check valve closed by the pressure piston, bypass valve (11) closed by the test bench control.

12. A method for actuating a test bench according to anyone of claims 7 to 11, comprising the following steps of:
- activating the brake actuator (7) for moving the pressure piston to an open position in which the bottom check valve of the brake master cylinder (4) is open;
- activating the brake actuator (7) for moving the pressure piston and closing the bottom check valve therein when the bypass valve (11) is open;
- closing the bypass valve (11);
- activating the brake actuator (7) for further moving the pressure piston and building up a brake pressure in the brake master cylinder (4) and, therefore, start of the brake application.

## Revendications

1. Banc d'essai pour un frein (3), avec
- un dispositif générateur de pression à actionnement mécanique (4) pour fournir un fluide de frein avec une pression hydraulique accrue, étant précisé que le fluide de frein est apte à être amené dans le frein (3) pour actionner celui-ci ; et avec
- un actionneur de frein électromécanique (7) pour l'actionnement mécanique du dispositif générateur de pression (4) ;
**caractérisé en ce que**
- l'actionneur de frein (7) comporte un moteur électrique (8) apte à être commandé par une commande de banc d'essai, et un engrenage planétaire (9) apte à être entraîné par le moteur électrique (8) ; et **en ce que**
- l'engrenage planétaire (9) est accouplé mécaniquement au dispositif générateur de pression (4) afin d'actionner mécaniquement le dispositif générateur de pression (4).

2. Banc d'essai selon la revendication 1, **caractérisé en ce que** l'engrenage planétaire (9) comporte
- un manchon de carter avec un filetage intérieur ;
- un arbre d'entraînement apte à être entraîné par le moteur électrique (8) ;
- une cage de roulement apte à être entraînée en rotation par l'arbre d'entraînement ; et
- plusieurs axes, portés par la cage de roulement, qui s'étendent parallèlement à l'arbre d'entraînement et qui portent en rotation au moins une roue satellite chacun ;
étant précisé que
- les roues satellites présentent sur leur circonférence extérieure un profil fileté qui correspond au profil du filetage intérieur du manchon de carter ; et que
- les roues satellites, lors d'une rotation de l'arbre d'entraînement et de la cage de roulement, tournent dans le filetage intérieur et provoquent ainsi un mouvement relatif axial entre les roues satellites et le manchon de carter.

3. Banc d'essai selon la revendication 1 ou 2, **caractérisé en ce que**
- l'engrenage planétaire (9) comporte un poussoir (6) ; et **en ce que**
- le mouvement relatif axial provoque un mouvement de va-et-vient axial du poussoir (6).

4. Banc d'essai selon l'une des revendications précédentes, **caractérisé en ce que** l'actionneur de frein (7) comporte un dispositif détecteur de position pour détecter la position actuelle du poussoir (6).

5. Banc d'essai selon la revendication 4, **caractérisé en ce que** le dispositif détecteur de position comporte un capteur de rotation, un capteur à effet de Hall, un capteur de proximité inductif ou un capteur de proximité capacitif.

6. Banc d'essai selon l'une des revendications précédentes, **caractérisé en ce que**
- la commande de banc d'essai est reliée à une commande de moteur (10) pour le moteur électrique (8) ;
- la commande de moteur (10) comporte un convertisseur et une servocommande.

7. Banc d'essai selon l'une des revendications précédentes, **caractérisé en ce que** le dispositif générateur de pression comporte un maître-cylindre de frein (4), un piston de pression qui est mobile axialement dans celui-ci sous l'action de l'actionneur de frein (7), et un réservoir pour le fluide de frein, qui est relié au maître-cylindre (4) par une conduite d'alimentation (13).

8. Banc d'essai selon la revendication 7, **caractérisé en ce qu'**il est prévu une conduite de frein (5) pour relier le maître-cylindre (4) au frein (3) à tester.

9. Banc d'essai selon la revendication 7 ou 8, **caractérisé**
- **en ce qu'**il est prévu une conduite de dérivation (12) qui relie la conduite d'alimentation (13) et la conduite de frein (5) ;
- **en ce qu'**une soupape de dérivation (11) apte à être commandée est disposée dans la conduite de dérivation (12) ; et
- **en ce que** la soupape de dérivation (11) est apte à être commandée de manière à être ouverte quand la commande de banc d'essai n'exige pas d'actionnement du frein (3), et à être fermée quand la commande de banc d'essai exige un actionnement du frein (3).

10. Banc d'essai selon la revendication 7, 8 ou 9, **caractérisé en ce que**
- le maître-cylindre de frein (4) comporte une soupape de fond par l'intermédiaire de laquelle une pression hydraulique appliquée dans le maître-cylindre (4) peut être complètement supprimée quand ladite soupape de fond est ouverte ;
- la soupape de fond est apte à être ouverte et fermée en fonction d'une position du piston de pression ;
- la soupape de fond est ouverte quand le piston de pression se trouve dans une position initiale.

11. Banc d'essai selon la revendication 9, **caractérisé en ce que** lors d'une opération de freinage, les états suivants peuvent être obtenus :
- état d'ouverture : piston de pression en position ouverte (première position), soupape de fond ouverte, soupape de dérivation (11) ouverte ;
- état de référence : piston de pression amené axialement dans une deuxième position, soupape de fond fermée par le piston de pression, soupape de dérivation (11) ouverte ;
- état de freinage : piston de pression amené axialement dans la deuxième position ou dans une autre position, la troisième position, plus éloignée axialement de la première position que la deuxième position ; soupape de fond fermée par le piston de pression ; soupape de dérivation (11) fermée par la commande de banc d'essai.

12. Procédé pour actionner un banc d'essai selon l'une des revendications 7 à 11, avec les étapes de
- commande de l'actionneur de frein (7) pour déplacer le piston de pression jusqu'à une position ouverte dans laquelle la soupape de fond du maître-cylindre (4) est ouverte ;
- commande de l'actionneur de frein (7) pour déplacer le piston de pression, en fermant la soupape de fond alors que la soupape de dérivation (11) est ouverte ;
- fermeture de la soupape de dérivation (11) ;
- commande de l'actionneur de frein (7) pour déplacer davantage le piston de pression et former une pression de freinage dans le maître-cylindre (4) et commencer ainsi l'opération de freinage.
